(19) Europäisches Patentamt / European Patent Office / Office européen des brevets

(11) **EP 3 623 748 B1**

(12) **EUROPÄISCHE PATENTSCHRIFT**

(45) Veröffentlichungstag und Bekanntmachung des Hinweises auf die Patenterteilung:
**15.11.2023 Patentblatt 2023/46**

(21) Anmeldenummer: **19190163.6**

(22) Anmeldetag: **06.08.2019**

(51) Internationale Patentklassifikation (IPC):
**G01B 7/24** (2006.01)    **G01L 1/12** (2006.01)
**G01M 13/023** (2019.01)    **B65G 15/30** (2006.01)
**B65G 43/02** (2006.01)    **F16G 1/12** (2006.01)
**F16G 5/08** (2006.01)    **F16G 5/10** (2006.01)
**F16G 5/14** (2006.01)

(52) Gemeinsame Patentklassifikation (CPC):
**G01B 7/24; B65G 43/02; F16G 5/08; F16G 5/10;
F16G 5/14; G01L 1/122; G01M 5/0058;
G01M 13/023; B65G 15/30; B65G 2203/0275;
B65G 2203/043; G01B 7/046**

(54) **SYSTEM ZUR ERMITTLUNG EINER LÄNGSDEHNUNG EINES RIEMENS**

SYSTEM FOR DETERMINING A LONGITUDINAL ELONGATION OF A BELT

SYSTÈME POUR DÉTERMINER L'ALLONGEMENT LONGITUDINAL D'UNE COURROIE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **12.09.2018 DE 102018215478**

(43) Veröffentlichungstag der Anmeldung:
**18.03.2020 Patentblatt 2020/12**

(73) Patentinhaber: **ContiTech Antriebssysteme
GmbH
30165 Hannover (DE)**

(72) Erfinder: **Sattler, Heiko
30165 Hannover (DE)**

(74) Vertreter: **Continental Corporation
c/o Continental AG
Intellectual Property
Postfach 169
30001 Hannover (DE)**

(56) Entgegenhaltungen:
CN-B- 104 692 078    DE-A1- 19 902 759
DE-A1-102010 002 551    DE-A1-102011 051 923
DE-A1-102013 111 191    JP-A- 2018 047 973
US-A- 5 291 131

**Beschreibung**

Die Erfindung betrifft ein System zur Ermittlung einer Längsdehnung eines Riemens.

Ein System, das einen Riemen und eine Antriebsvorrichtung für den Riemen aufweist, ist grundsätzlich aus dem Stand der Technik bekannt. Dabei weist die Antriebsvorrichtung mehrere, beispielsweise zwei Riemenscheiben auf. Der Riemen ist in einer Umfangsrichtung ringförmig umlaufend ausgebildet und umschlingt die Riemenscheiben zumindest teilweise. Außerdem ist der Riemen von der Antriebsvorrichtung in Umfangsrichtung antreibbar. Bei einem Riemen handelt es sich vorzugsweise um einen Antriebsriemen zur Übertragung von Zugkräften. Dabei ist ein Riemen oftmals einer Vorspannung, Nutzkräften, Fliehkräften und/oder Biegungen ausgesetzt.

Die Lebensdauer von einem Riemen wird durch die Dehnung des Riemens, insbesondere die Dehnung in Umfangsrichtung, zumindest mitbestimmt. Die Umdrehungsrate, mit der sich der Riemen bewegt, und/oder die Leistung, die zum Antrieb des Riemens notwendig ist, kann über die Belastung des Riemens Aufschluss geben. Allerdings kann aus dieser Belastung nur eine grobe Abschätzung einer tatsächlich lokal auftretenden Dehnung des Riemens erfolgen. Eine genaue Bestimmung basierend auf der zuvor genannten Belastung ist nicht möglich.

Aus dem Stand der Technik sind Dehnungsmessstreifen bekannt. Die Verwendung eines Dehnungsmessstreifens bedarf jedoch einer elektrischen Messschaltung, die mit dem Dehnungsmessstreifen zu koppeln ist, um eine von dem Dehnungsmessstreifen erfasste Dehnung auszuwerten bzw. ein entsprechendes Auswertungssignal bereitzustellen. Um einen Dehnungsmessstreifen deshalb für einen Riemen zu verwenden, bedarf es ebenfalls der Befestigung der zuvor genannten Auswertungsschaltung an dem Riemen. Insbesondere wenn der Riemen während des Gebrauchs einer hohen Temperatur ausgesetzt ist, die beispielsweise durch Reibung des Riemens an einer Umlenkscheibe und/oder durch eine hohe Umgebungstemperatur beeinflusst ist, ist eine robuste Auswerteschaltung nur mit sehr hohem technischen Aufwand und entsprechenden Kosten herstellbar, die bei entsprechend hohen Temperaturen eine verlässliche Messung der Dehnung mittels des Dehnungsmessstreifens gewährleistet.

Die US 5,291,131 A betrachtet die Dehnung eines sich bewegenden Endloskörpers wie z. B. einer Kette, eines Riemens, eines Förderers oder dergleichen, welche kontinuierlich gemessen wird, indem zwei Indizes, z. B. Stifte oder Zungen, auf dem Endloskörper und zwei Sensoren, z. B. magnetische oder optische Sensoren, entlang der Umlaufbahn des Endloskörpers angebracht werden. Die Sensoren sind an eine Rechenschaltung angeschlossen, die aus den von den Sensoren gelieferten Daten die Dehnung ermittelt.

Die JP 2018-047973 A betrifft die Bereitstellung einer Vorrichtung zur Messung der Dehnung eines Förderbandes, die in der Lage ist, die Dehnung eines Förderbandes in einer Umfangsrichtung auch dann korrekt zu messen, wenn das Förderband mäandert. Hierzu sind zwei Magnetelemente, die mit einem Abstand in einer Bandumfangsrichtung eines Förderbandes angeordnet sind, ein Magnetsensor, der gegenüber einer äußeren Umfangsfläche des Förderbandes angeordnet ist und zum Erfassen eines Magnetfeldes dient, das die beiden Magnetelemente erzeugen, und ein Berechnungsteil zum Berechnen der Dehnung des Förderbandes in der Bandumfangsrichtung auf der Grundlage eines Ausgangssignals von dem Magnetsensor vorgesehen. Der Berechnungsteil berechnet ein Verhältnis zwischen der Länge der magnetischen Elemente in der Bandlaufrichtung, die basierend auf dem Ausgangssignal des Magnetsensors berechnet wird, und der Länge der magnetischen Elemente in der Bandumfangsrichtung, die tatsächlich im Voraus gemessen wird, und korrigiert einen Abstand in der Bandlaufrichtung zwischen den zwei magnetischen Elementen, der basierend auf dem Ausgangssignal des Magnetsensors berechnet wird, unter Verwendung des Verhältnisses.

Das CN 104692078 B beschreibt ein Verfahren zur Überwachung des Laufzustandes eines Förderbandes, umfassend: Anbringen einer Vielzahl von Erfassungselementen mit Signalempfangs- und -sendefunktionen innerhalb oder auf der Oberfläche des Förderbandes, und jedes Erfassungselement speichert Identifikationsinformationen zur Identifizierung seiner Identitätsinformationen. Es ist auch ein Lesegerät vorgesehen, das auf einer Seite des Förderbandes angeordnet ist. Im Schritt der Parametererfassung, wenn das Förderband läuft, liest das Lesegerät die Identifikationsinformationen des Erfassungselements, zeichnet die Erfassungszeit auf und erfasst die Identifikation zwischen dem Lesegerät und dem Erfassungselement.

Die DE 10 2013 111 191 A1 beschreibt ein Verfahren zur berührungslosen Überwachung eines Fördergurtes auf Beschädigung, wobei der Fördergurt eine Mehrzahl von elektrisch leitfähigen Einlagen aufweist, die sich zumindest teilweise in Querrichtung erstrecken, das Verfahren mit den Schritten: Aussenden eines ersten elektromagnetischen Signals an den Fördergurt, und in einem ersten Zustand wenigstens einer elektrisch leitfähigen Einlage, Reflektieren des ersten elektromagnetischen Signals durch die wenigstens eine elektrisch leitfähige Einlage als zweites elektromagnetischen Signals und Empfangen des zweiten elektromagnetischen Signals von dem Fördergurt, und in einem zweiten Zustand der wenigstens einen elektrisch leitfähigen Einlage, Nicht-Empfangen des zweiten elektromagnetischen Signals von dem Fördergurt.

Die DE 199 02 759 A1 beschreibt eine Überwachungseinrichtung bestehend aus vier Referenzmarken, zwei Adressen zur Identifizierung einer Messstelle und vier Sensorköpfen. Die Sensorköpfe sind oberhalb der Tragseite des Förderbandes angeordnet. Das Förderband besteht typischerweise aus einem Gummi oder gummiähnlichen Material mit eingebetteten Verstärkungselementen. Zur Erfassung der Gurttemperatur und der Umgebungstemperatur ist eine Messeinrichtung vorgesehen.

Die DE 10 2010 002 551 A1 beschreibt einen Riemen zur Übertragung einer Antriebsbewegung mit einem Riemenkörper aus einem elastischen Werkstoff und mit einer in Riemenlängsrichtung erstreckten und von dem Riemenkörper zumindest abschnittsweise umgebenen Karkasse zur Erhöhung der Festigkeit des Riemenkörpers in Riemenlängsrichtung, wobei in dem Riemenkörper ein Datenspeicher angeordnet ist zur Speicherung von Daten, wobei als Daten wenigstens eine riemenidentifizierende Information in dem Datenspeicher gespeichert ist, wobei die Antriebsbewegung in Abhängigkeit von der riemenidentifizierenden Information stillsetzbar und/oder freigebbar ist.

Die DE 10 2011 051 923 A1 beschreibt eine Einrichtung zur kontinuierlichen und zerstörungsfreien Überwachung einer Förderanlage mit folgenden Bauteilen: einem endlos geschlossenen Fördergurt mit einer tragseitigen Deckplatte und laufseitigen Deckplatte aus jeweils einem polymeren Werkstoff mit elastischen Eigenschaften sowie mit einem eingebetteten Zugträger; Trommeln, Tragrollen und Tragerüste, wobei die vorgenannten Bauteile in Verbindung mit dem Fördergurt ein materialförderndes Obertrum mit einer Aufgabestelle und Abgabestelle für das Fördermaterial und ein materialförderndes oder materialfreies Untertrum bilden; einem Leiterschleifen-Paket mit endlos geschlossenen Leiterschleifen, das im Fördergurt eingebettet ist; sowie einem elektronischen Schlitzschutzsystem zur berührungslosen Erfassung von Schäden des Fördergurtes, wobei das Schlitzschutzsystem ein elektrisches Gerätesystem ist, das wenigstens eine Abfragestation sowie wenigstens eine Schlitzüberwachungsstation umfasst und dabei an eine Zentralsteuerung angeschlossen ist, die die gesamte Förderanlage steuert. Die Einrichtung ist im Rahmen eines Leiterschleifen-Pakets mit sequentiellen Leiterschleifen und einem sequentiellen Schlitzschutzsystem ausgerüstet, wobei die diesbezügliche Funktionslogik detailliert beschrieben wird.

Der Erfindung liegt deshalb die Aufgabe zugrunde, ein System bereitzustellen, mit dem eine verlässliche und robuste Erfassung einer Dehnung eines Riemens - auch im Betrieb - gewährleistet werden kann.

Gelöst wird die Aufgabe durch ein System mit den Merkmalen des Anspruchs 1. Vorgesehen ist also ein System zur Ermittlung einer Längsdehnung eines Riemens. Das System weist einen Riemen, eine Antriebsvorrichtung, einen Transmitter und eine Auswerteeinheit auf. Die Antriebsvorrichtung weist mehrere Riemenscheiben auf. Die Auswerteeinheit kann mit dem Transmitter kombiniert ausgebildet sein. Der Riemen weist ein Basismaterial, einen Festigkeitsträger, ein erstes ferromagnetisches Markierungsteil und ein zweites ferromagnetisches Markierungsteil auf. Das Basismaterial kann beispielsweise aus Gummimaterial oder Polyurethanmaterial zumindest teilweise gebildet sein. Vorzugsweise ist das Basismaterial aus Gummimaterial. Der Riemen ist in einer Umfangsrichtung des Riemens ringförmig umlaufend ausgebildet. Außerdem umschlingt der Riemen die Riemenscheiben jeweils zumindest teilweise. Der Riemen ist von der Antriebsrichtung in Umfangsrichtung antreibbar. Der Festigkeitsträger des Riemens ist als ein durchgängiger, in Umfangsrichtung schraubenförmig gewendelter Cord ausgebildet und in das Basismaterial des Riemens eingebettet. Das erste Markierungsteil und das zweite Markierungsteil sind jeweils in das Basismaterial eingebettet und/oder an dem Basismaterial befestigt. Der Transmitter des Systems ist zum Erzeugen eines ersten, elektromagnetischen Wechselfelds ausgebildet, das als Referenzwechselfeld bezeichnet ist. Das erste ferromagnetische Markierungsteil ist zur Veränderung des Referenzwechselfelds in ein zweites, elektromagnetisches Wechselfeld ausgebildet, wenn das Referenzwechselfeld auf das erste ferromagnetische Markierungsteil einwirkt. Das zweite elektromagnetische Wechselfeld wird als erstes Reaktionswechselfeld bezeichnet. Das zweite ferromagnetische Markierungsteil ist zur Veränderung des Referenzwechselfelds in ein drittes, elektromagnetisches Wechselfeld ausgebildet, wenn das Referenzwechselfeld auf das zweite ferromagnetische Markierungsteil einwirkt. Das dritte, elektromagnetische Wechselfeld wird als das zweite Reaktionswechselfeld bezeichnet. Das zweite Markierungsteil ist in einem vorbestimmten Referenzabstand in Umfangsrichtung hinter dem ersten Markierungsteil angeordnet, zumindest in einem unbelasteten Zustand des Riemens. Der Transmitter ist kontaktfrei zu dem Riemen derart angeordnet, so dass das erste Markierungsteil und das zweite Markierungsteil mittels des Riemens nacheinander an dem Transmitter vorbeiführbar und durch das Referenzwechselfeld hindurchführbar sind, was in einem Einwirken des Referenzwechselfelds nacheinander auf das erste Markierungsteil und das zweite Markierungsteil resultiert. Der Transmitter ist außerdem zur Erfassung des ersten Reaktionswechselfelds und einer zugehörigen, ersten Erfassungszeit ausgebildet, wenn das erste Markierungsteil an dem Transmitter vorbeigeführt wird. Außerdem ist der Transmitter zur Erfassung des zweiten Reaktionswechselfelds und der zugehörigen zweiten Erfassungszeit ausgebildet, wenn das zweite Markierungsteil an dem Transmitter vorbeigeführt wird. Das System, und insbesondere der zugehörige Transmitter und/oder die zugehörige Auswerteeinheit, ist konfiguriert, eine Riemengeschwindigkeit des Riemens in Umfangsrichtung basierend auf dem ersten Reaktionswechselfeld und/oder dem zweiten Reaktionswechselfeld zu ermitteln. Die Auswerteeinheit ist dazu konfiguriert, eine Längsdehnung des Riemens basierend auf dem Referenzabstand, der Riemengeschwindigkeit, der ersten Erfassungszeit und der zweiten Erfassungszeit zu ermitteln. Erfindungsgemäß sind das erste und zweite Markierungsteil zumindest indirekt miteinander mittels Verbindungsstege verbunden ausgebildet, so dass der vorbestimmte Referenzabstand in dem unbelasteten Zustand des Riemens zwischen den beiden Markierungsteilen in Umfangsrichtung sicher gewährleistet werden kann.

Das System bietet den Vorteil, dass auf eine Längsdehnung des Riemens mittels des Transmitters und der Auswerteeinheit geschlossen werden kann. Der Transmitter kann auch als Transmittereinheit bezeichnet und/oder ausgebildet sein. Darüber hinaus ist der Riemen des Systems besonders robust gegenüber hohen Temperaturen und/oder anderen mechanischen, äußeren Einflüssen.

Mittels des Transmitters des Systems kann ein Referenzwechselfeld erzeugt werden, durch das der Riemen, angetrieben durch die Antriebsvorrichtung, hindurchbewegt werden kann, so dass das erste Markierungsteil und das zweite Markierungsteil des Riemens nacheinander durch das Referenzwechselfeld bewegt werden. Jedes der beiden Markierungsteile kann zur Einkopplung in das Referenzwechselfeld ausgebildet sein. Dadurch ist es möglich, dass das Referenzwechselfeld in das erste Reaktionswechselfeld verändert wird, wenn das erste Markierungsteil durch das Referenzwechselfeld bewegt wird und dabei auf das Referenzwechselfeld einwirkt. Entsprechendes gilt für das zweite Markierungsteil, dass das Referenzwechselfeld in das zweite Reaktionswechselfeld verändert, wenn das zweite Markierungsteil durch das Referenzwechselfeld geführt wird und dabei auf das Referenzwechselfeld einwirkt. An dieser Stelle sei darauf hingewiesen, dass das Referenzwechselfeld, das erste Reaktionswechselfeld und das zweite Reaktionswechselfeld nicht gleichzeitig bestehen. Vielmehr kann zu jedem Zeitpunkt nur eines der zuvor genannten Wechselfelder bestehen.

Von dem Transmitter wird eine erste Erfassungszeit erfasst, wenn von dem Transmitter das erste Reaktionswechselfeld erfasst ist. Dies tritt auf, wenn das erste Markierungsteil an dem Transmitter vorbeigeführt wird, der zur Erzeugung des Referenzwechselfelds ausgebildet ist. Durch das Vorbeiführen des ersten Markierungsteils wird jedoch das erste Markierungsteil in das Referenzwechselfeld eingekoppelt, was zur Veränderung des Referenzwechselfelds in das erste Reaktionswechselfeld führt. Diese Veränderung tritt zu der ersten Erfassungszeit auf, die von dem Transmitter erfasst wird. Entsprechendes gilt für das zweite Markierungsteil bzw. die zweite Erfassungszeit. Zumindest im unbelasteten Zustand des Riemens ist das zweite Markierungsteil in dem vorbestimmten Referenzabstand in Umfangsrichtung hinter dem ersten Markierungsteil angeordnet. Wird der Riemen in Umfangsrichtung mittels der Antriebsvorrichtung angetrieben, so bewegt sich zunächst das erste Markierungsteil durch das Referenzwechselfeld und danach das zweite Markierungsteil. Wenn das zweite Markierungsteil an dem Transmitter vorbeigeführt wird, findet eine Einkopplung des zweiten Markierungsteils in das Referenzwechselfeld statt, was zu der Veränderung des Referenzwechselfelds in das zweite Reaktionswechselfeld führt. Der Transmitter ist zur Erfassung dieses zweiten Reaktionswechselfelds und der zugehörigen zweiten Erfassungszeit ausgebildet.

Grundsätzlich ist es möglich, dass das erste und zweite Markierungsteil gleich ausgebildet sind. Jedoch können die beiden Markierungsteile auch unterschiedlich ausgebildet sein.

Außerdem ist das System konfiguriert, die Riemengeschwindigkeit des Riemens in Umfangsrichtung basierend auf dem ersten Reaktionswechselfeld oder dem zweiten Reaktionswechselfeld zu ermitteln. Dies gilt insbesondere für den Transmitter, der zur Ermittlung der Riemengeschwindigkeit des Riemens in Umfangsrichtung basierend auf dem ersten Reaktionswechselfeld und/oder dem zweiten Reaktionswechselfeld ausgebildet ist. Der Transmitter kann dazu als magnetoresistiver Transmitter ausgebildet sein und/oder die Funktion eines magnetoresistiven Sensors umfassen.

Wird der Riemen mit einer bestimmten Riemengeschwindigkeit in Umfangsrichtung angetrieben, und ist der Riemen in einem unbelasteten Zustand, so ist das zweite Markierungsteil in einem vorbestimmten Referenzabstand in Umfangsrichtung hinter dem ersten Markierungsteil angeordnet. Befindet sich der Riemen jedoch nicht in dem unbelasteten Zustand, sondern beispielsweise in einem belasteten Zustand, bei dem eine Zugkraft auf den Riemen, insbesondere auf ein Zugtrum des Riemens, wirkt, so vergrößert sich der Abstand zwischen dem zweiten Markierungsteil und dem ersten Markierungsteil in Umfangsrichtung. Hieraus resultiert, dass sich der Abstand zwischen der ersten Erfassungszeit und der zweiten Erfassungszeit bei der gleichen Riemengeschwindigkeit vergrößert, wenn der Riemen von dem unbelasteten Zustand in den zuvor erläuterten Belastungszustand wechselt. Daraus resultiert, dass aus der ersten und zweiten Erfassungszeit, der Riemengeschwindigkeit und dem Referenzabstand auf die Dehnung des Riemens in Umfangsrichtung, die auch als Längsdehnung des Riemens bezeichnet wird, geschlossen werden kann.

Deshalb ist die Auswerteeinheit dazu konfiguriert, eine Längsdehnung des Riemens basierend auf dem Referenzabstand, der Riemengeschwindigkeit, der ersten Erfassungszeit und der zweiten Erfassungszeit zu ermitteln.

Zur Ermittlung der Längsdehnung des Riemens bedarf es deshalb keines mechanischen Eingriffs in den Riemen während des Betriebs des Riemens. Vielmehr kann die Längsdehnung des Riemens während des Betriebs des Riemens kontaktfrei erfasst werden. Darüber hinaus bieten das erste Markierungsteil und das zweite Markierungsteil, die jeweils in das Basismaterial des Riemens eingebettet sind, den Vorteil, dass die Ermittlung der Längsdehnung des Riemens auch bei einer hohen Temperatur des Riemens besonders präzise und/oder robust gegenüber Temperatureinflüssen möglich ist. Indem das erste und zweite Markierungsteil in das Basismaterial eingebettet sind, ist die Ermittlung der Längsdehnung des Riemens auch besonders robust gegenüber möglichen mechanischen Einflüssen, die auf den Riemen wirken können.

Bei der Dehnung handelt es sich vorzugsweise um eine relative Dehnung. Die Längsdehnung des Riemens kann also eine relative Dehnung des Riemens in Längsrichtung sein.

Wie zuvor erläutert, wird durch jedes der beiden ferromagnetischen Markierungsteile jeweils eine Veränderung des Referenzwechselfelds hervorgerufen. Die Veränderung findet aber nicht notwendigerweise gleichmäßig über das gesamte Frequenzband des Referenzwechselfelds statt. Es ist vielmehr möglich, dass jedes der beiden ferromagnetischen Markierungsteile zur Veränderung eines vorbestimmten Frequenzbereichs ausgebildet ist, so dass die dadurch hervorgerufene Veränderung des Referenzwechselfelds charakteristisch und/oder repräsentativ für das jeweilige Markierungsteil ist. Durch jedes Markierungsteil wird also vorzugsweise eine zugehörige Veränderung des Referenzwechselfelds hervorgerufen, so dass aus der Wechselwirkung des Referenzwechselfelds mit dem jeweiligen Markierungsteil ein entsprechendes Reaktionswechselfeld, nämlich das erste Reaktionswechselfeld oder das zweite Reaktionswechselfeld, entsteht. Das jeweilige Reaktionswechselfeld besteht jedoch zumindest nur für eine kurze Zeit, wenn das jeweilige Markierungsteil durch das Referenzwechselfeld hindurchgeführt wird. Jede Erfassungszeit kann auch als ein Erfassungszeitpunkt bezeichnet sein. Jede Erfassungszeit repräsentiert vorzugsweise den Zeitpunkt der maximalen Veränderung des jeweiligen Referenzwechselfelds durch das jeweilige Markierungsteil. Aus den beiden Erfassungszeiten ist ein Zeitraum ermittelbar, wobei aus dem Zeitraum, der Riemengeschwindigkeit und dem Referenzabstand auf die relative Dehnung des Riemens geschlossen werden kann. Hierzu ist die Auswerteeinheit bevorzugt entsprechend konfiguriert ausgebildet. Der Transmitter und die Auswerteeinheit können von einer gemeinsamen Einheit ausgebildet sein, die auch als Transmitter-Auswerteeinheit bezeichnet sein kann.

Eine vorteilhafte Ausgestaltung des Systems zeichnet sich dadurch aus, dass die Auswerteeinheit konfiguriert ist, basierend auf einer Historie ermittelter Längsdehnungen des Riemens eine Restlebensdauer des Riemens zu ermitteln. So kann die Auswerteeinheit ausgebildet sein, zeitlich hintereinander mehrere Längsdehnungen zu ermitteln. Die Ermittlung kann dabei in festen Abständen erfolgen. Es ist jedoch auch möglich, dass die Ermittlung getriggert durch die Erfassung des zweiten Reaktionswechselfelds erfolgt. Die erfassten Längsdehnungen können von der Auswerteeinheit gespeichert sein. Basierend auf diesen ermittelten Längsdehnungen kann die Auswerteeinheit deshalb dazu konfiguriert sein, die Restlebensdauer des Riemens zu ermitteln. Eine entsprechend ermittelte Restlebensdauer kann dazu dienen, die Wartungsintervalle und/oder den Austausch des Riemens vorausschauend zu planen.

Eine weitere vorteilhafte Ausgestaltung des Systems zeichnet sich dadurch aus, dass die erste Erfassungszeit einen Zeitpunkt einer maximalen Veränderung des Referenzwechselfelds durch das erste Markierungsteil repräsentiert, und dass die zweite Erfassungszeit einen Zeitpunkt einer maximalen Veränderung des Referenzwechselfelds durch das zweite Markierungsteil repräsentiert. Wird das erste bzw. das zweite Markierungsteil durch das Referenzwechselfeld bewegt, liegt die größte Veränderung des Referenzwechselfelds beispielsweise oftmals dann vor, wenn das jeweilige Markierungsteil mittig in dem Referenzwechselfeld angeordnet ist. Die Bewegung des jeweiligen Markierungsteils zu der mittigen Anordnung bzw. die Bewegung heraus aus dieser mittigen Anordnung führt jeweils zu einer Abnahme der Veränderung des Referenzwechselfelds. Um die erste Erfassungszeit möglichst präzise bestimmen zu können, ist es bevorzugt vorgesehen, dass die erste Erfassungszeit den Zeitpunkt der maximalen Veränderung des ersten Referenzwechselfelds durch das erste Markierungsteil repräsentiert. Entsprechendes gilt für die zweite Erfassungszeit, die durch den Zeitpunkt der maximalen Veränderung des Referenzwechselfelds durch das zweite Markierungsteil repräsentiert ist. Bei jedem Umlauf des Riemens können somit die Ersterfassungszeit und die Zweiterfassungszeit präzise bestimmt bzw. ermittelt werden.

Eine weitere vorteilhafte Ausgestaltung des Systems zeichnet sich dadurch aus, dass der Transmitter, insbesondere als ein Teil einer Transmitter-Auswerteeinheit, kontaktfrei an einem Trum des Riemens angeordnet ist. Der Trum kann dabei von einem Zugtrum des Riemens gebildet sein. Indem der Transmitter bzw. die Transmitterauswerteeinheit kontaktfrei zu dem Trum, insbesondere dem Zugtrum, des Riemens angeordnet ist, kann der Riemen reibungsfrei an dem Transmitter vorbei bewegt werden. Ein Verschleiß des Riemens und/oder des Transmitters bei der Verwendung des Transmitters und/oder der Auswerteeinheit zur Ermittlung der Längsdehnung des Riemens liegt deshalb nicht vor.

Eine weitere vorteilhafte Ausgestaltung des Systems zeichnet sich dadurch aus, dass der Transmitter, insbesondere als ein Teil der Transmitter-Auswerteeinheit, in einem Abstand zwischen 1 mm und 50 cm zu dem Trum des Riemens angeordnet ist. Hierbei handelt es sich vorzugsweise um ein Zugtrum des Riemens. Durch den vorbestimmten Abstand kann gewährleistet werden, dass der Transmitter keinen direkten mechanischen Kontakt zu dem Riemen aufweist. Somit kann die Längsdehnung des Riemens im laufenden Betrieb ohne negativen mechanischen Einfluss auf den Riemen ausgeführt werden. Indem der vorbestimmte Abstand zwischen 1 mm und 50 cm ist, kann darüber hinaus gewährleistet werden, dass elektromagnetische Störeinflüsse allenfalls einen vernachlässigbaren Einfluss auf die Erfassung des ersten und/oder zweiten Reaktionswechselfelds haben. Damit ist eine sehr störgrößenrobuste Erfassung des ersten bzw. zweiten Reaktionswechselfelds möglich.

Eine weitere vorteilhafte Ausgestaltung des Systems zeichnet sich dadurch aus, dass der Referenzabstand kleiner als eine kleinste Trumlänge des Riemens ist. Das zweite Markierungsteil ist in dem Referenzabstand in Umfangsrichtung des Riemens hinter dem ersten Markierungsteil angeordnet, wenn der Riemen in einem unbelasteten Zustand ist. Die kleinste Trumlänge des Riemens bezieht sich vorzugsweise auf die kleinste der mindestens einen Trumlänge des mindestens einen Zugtrums des Riemens. Es ist jedoch auch möglich, dass das System derart ausgestaltet ist, dass der Referenzabstand kleiner als eine Trumlänge eines beliebigen Zugtrums des Riemens ist. Somit ist der Referenzabstand derart bestimmt, dass beim Umlauf des Riemens zumindest ein Zeitpunkt besteht, bei dem sowohl das erste Markierungsteil als auch das zweite Markierungsteil in dem gleichen Zugtrum angeordnet sind. Durch die Zugbelastung kann der Abstand zwischen den beiden Markierunsgteilen größer als der Referenzabstand sein. Dies ist für gewöhnlich jedoch nur in einem einstelligen Prozentbereich der Fall. Deshalb kann weiterhin davon ausgegangen werden, dass auch bei einer Zugbelastung die Voraussetzung erfüllt ist, dass beide Markierungsteile beim Umlauf des Riemens an zumindestens einem Zeitpunkt zeitgleich in dem gleichen Zugtrum angeordnet sind. Dabei können die beiden Markierungsteile nacheinander durch das Referenzwechselfeld bewegt werden, was die zuvor erläuterte Ermittlung der Längsdehnung des Riemens ermöglicht. Die ermittelte Längsdehnung des Riemens repräsentiert dabei die Längsdehnung des Riemens im Zugtrum. Diese ist besonders interessant und/oder repräsentativ. Denn im Zugtrum findet oftmals die größte Belastung und/oder die größte Zugbelastung des Riemens statt. Diese Belastung bzw. die dort erfasste Längsdehnung des Riemens kann deshalb für die weitere Auswertung und/oder für weitere Voraussagen über den Zustand des Riemens vorteilhaft verwendet werden. Allerdings gibt es auch andere Fälle, in denen der Dehnungszustand eines Leertrums des Riemens von Interesse ist. In diesem Fall kann es vorgesehen sein, dass der Referenzabstand zwischen den Markierungspfeilen kleiner als eine Trumlänge eines Leertrums ist. Sodann können mittels des Systems beispielsweise die Längsdehnung des Leertrums, insbesondere aufgrund einer Vorspannung des Riemens, ermittelt werden. Auch dies kann in der Praxis von Interesse sein.

Eine weitere vorteilhafte Ausgestaltung des Systems zeichnet sich dadurch aus, dass der Referenzabstand maximal 90 %, maximal 80 %, maximal 70 %, maximal 60 % oder maximal 50 % einer Trumlänge des Riemens beträgt. Hierbei handelt es sich vorzugsweise um die kürzeste Trumlänge und/oder um die Trumlänge des Zugtrums, insbesondere des kürzesten Zugtrums. Durch die Begrenzung des Referenzabstands kann besonders einfach sichergestellt werden, dass die beiden Markierungsteile beim Umlauf des Riemens gleichzeitig in dem entsprechenden Trum mit der Trumlänge angeordnet sind, um die Erfassung des ersten und zweiten Reaktionswechselfelds an dem entsprechenden Trum zu gewährleisten.

Eine weitere vorteilhafte Ausgestaltung des Systems zeichnet sich dadurch aus, dass jedes Markierungsteil passiv, insbesondere rein passiv, ausgebildet ist. Jedes der beiden Markierungsteile kann somit als ein passives, ferromagnetisches Markierungsteil ausgebildet sein. Die passive Ausgestaltung des jeweiligen Markierungsteils ist zur Veränderung des Referenzwechselfelds ausreichend, da das ferromagnetische Material des jeweiligen Markierungsteils durch die Anordnung in dem Referenzwechselfeld eine durch Induktion basierte Veränderung des Wechselfelds hervorrufen kann. Keines der beiden Markierungsteile ist deshalb mit weiteren elektronischen Bauteilen gekoppelt. Vielmehr ist es bevorzugt vorgesehen, dass jedes der beiden Markierungsteile vollständig in das Basismaterial des Riemens eingebettet ist, so dass jedes der beiden Markierungsteile vollständig von dem Basismaterial umhüllt ist. Dadurch kann gewährleistet werden, dass jedes der beiden Markierungsteile kontaktfrei zu dem Festigkeitsträger des Riemens und/oder anderen möglichen Bauteilen des Riemens angeordnet ist. Dies bietet wiederum den Vorteil, dass auch bei einer größeren Belastung des Riemens kein Reibeffekt zwischen dem Festigkeitsträger des Riemens und einem der beiden Markierungsteile auftritt. Somit kann effektiv gewährleistet werden, dass keine Reibung und/oder kein Verschleiß des Riemens durch die Einbettung der Markierungsteile in das Basismaterial des Riemens hervorgerufen wird. Der Riemen ist deshalb besonders robust.

Eine weitere vorteilhafte Ausgestaltung des Systems zeichnet sich dadurch aus, dass jedes Markierungsteil als ein stabförmiges Markierungsteil oder als ein folienförmiges Markierungsteil ausgebildet ist. Außerdem ist es bevorzugt vorgesehen, dass sich jedes Markierungsteil mit seiner größten Ausdehnung quer zur Umfangsrichtung des Riemens erstreckt. So kann beispielsweise die Längsachse eines jeden stabförmigen Markierungsteils quer zur Umfangsrichtung angeordnet sein. Bei einem folienförmigen Markierungsteil besteht auch die Möglichkeit, dass die Folie eine größte Ausdehnung in eine Richtung aufweist, die quer zur Umfangsrichtung angeordnet ist. Außerdem ist es bevorzugt vorgesehen, dass sich jedes Markierungsteil von einer Seitenwand zu der gegenüberliegenden Seitenwand des Riemens erstreckt. Jede Seitenwand kann an einer entsprechenden Seitenflanke des Riemens angeordnet sein. Somit kann sich jedes Markierungsteil zumindest im Wesentlichen vollständig in Querrichtung von der einen Seitenwand zu der gegenüberliegenden Seitenwand erstrecken. Es ist jedoch auch möglich, dass eine Erstreckungslänge eines jeden Markierungsteils zwischen 95 % und 70 % des Abstands zwischen den beiden Seitenwänden beträgt. Damit kann effektiv gewährleistet werden, dass jedes Markierungsteil zumindest durch einen kleinen Abstand von der jeweiligen Außenseite nach innen versetzt beabstandet ist. Dadurch kann eine elektromagnetische Beeinflussung der Markierungsteile verhindert und/oder eine Isolierung der Markierungsteile durch das Basismaterial besonders effektiv sichergestellt werden. Jedes Markierungsteil kann beispielsweise einen Durchmesser und/oder eine Stärke von 5 $\mu$m bis 0,5 mm aufweisen. Dadurch wird die Steifigkeit des Riemens vernachlässigbar gering beeinflusst.

Eine vorteilhafte Ausgestaltung des Systems zeichnet sich dadurch aus, dass jedes Markierungsteil vorgefertigt ist. Ein entsprechend vorgefertigtes Markierungsteil kann somit bei der Herstellung des Riemens besonders einfach in das Basismaterial des Riemens eingebettet werden.

Eine nicht beanspruchte Ausgestaltung des Systems zeichnet sich dadurch aus, dass jedes Markierungsteil als gedrucktes Markierungsteil ausgebildet ist. Dabei kann das Markierungsteil durch ein gedrucktes, ferromagnetisches Metall-Markierungsteil gebildet sein. Es ist aber auch möglich, dass das Markierungsteil durch eine Materialmischung aus ferromagnetischem Material und einem weiteren druckfähigen Material gebildet ist. Bei der Herstellung des Riemens kann jedes Markierungsteil dabei an eine vorgesehene Stelle gedruckt werden, um daraufhin das jeweilige Markierungsteil vollständig in das Gummimaterial einzubetten. Dadurch ist eine besonders einfache und zugleich präzise Einbettung des jeweiligen Markierungsteils in das Gummimaterial möglich.

Eine weitere vorteilhafte Ausgestaltung des Systems zeichnet sich dadurch aus, dass jedes Markierungsteil einstückig ausgebildet ist. Dadurch ist es möglich, dass jedes Markierungsteil vollständig von dem Basismaterial im Riemen umgeben eingebettet ist. Durch das Basismaterial kann jedes Markierungsteil somit getrennt zu den weiteren, möglichen Bauteilen im Riemen angeordnet und/oder elektrisch isoliert zu dem restlichen Riemen ausgebildet sein. Die beiden Markierungsteile können durch ihre einstückig Ausgestaltung getrennt, und zwar vorzugsweise in dem Referenzabstand zueinander, angeordnet sein.

Eine erfindungsgemäße Ausgestaltung des Systems zeichnet sich dadurch aus, dass das erste Markierungsteil und das zweite Markierungsteil zumindest indirekt miteinander verbunden ausgebildet sind. Zwischen dem ersten und dem zweiten Markierungsteil können sich dabei Verbindungsstege, beispielsweise in Umfangsrichtung, erstrecken. Durch diese Verbindungsstege können das erste und zweite Markierungsteil eine mechanisch feste Verbindung zueinander aufweisen. Die Verbindungsstege sind vorzugsweise elektrisch isolierend ausgebildet. Das erste und zweite Markierungsteil sowie die Verbindungsstege können in Form eines rechteckigen Rahmens angeordnet sein. Dadurch kann der Referenzabstand zwischen den beiden Markierungsteilen in Umfangsrichtung besonders sicher gewährleistet werden. So kann der entsprechende Rahmen mit dem ersten und zweiten Markierungsteil sowie den Verbindungsstegen in das Basismaterial eingebettet werden, um daraufhin das Basismaterial beispielsweise zu vulkanisieren. Durch die Verbindungsstege kann der Referenzabstand aufrechterhalten werden. Der Referenzabstand zwischen dem ersten und zweiten Markierungsteil in unbelastetem Zustand des Riemens kann also besonders sicher gewährleistet werden. Die Verbindungsstege können elektrisch isolierend oder elektrisch leitend ausgebildet sein. Auch bei einer elektrisch leitenden Ausgestaltung der Verbindungsstege wurde in der Praxis festgestellt, dass jedes der beiden Markierungsteile eine jeweils erkennbare, zugehörige Veränderung des Referenzmagnetfelds hervorruft, was zu dem ersten bzw. zweiten Reaktionswechselfeld führt. Es ist deshalb auch möglich, dass das erste und zweite Markierungsteil sowie die beiden Verbindungsstege als verbundener und/oder einstückiger Rahmen ausgebildet sind.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.

Figur 1          zeigt eine vorteilhafte Ausgestaltung des Systems in einer schematischen Ansicht

Figur 2          zeigt einen Abschnitt eines Riemens in einer schematischen Ansicht

Figur 3 bis 5    zeigen Frequenzgänge von Wechselfeldern in beispielhaften Ausgestaltungen.

Figur 6          zeigt eine beispielhafte Ausgestaltung eines zeitlichen Verlaufs einer mittleren Feldstärke.

Figur 7          zeigt eine weitere vorteilhafte Ausgestaltung eines Abschnitts eines Riemens in einer schematischen Ansicht.

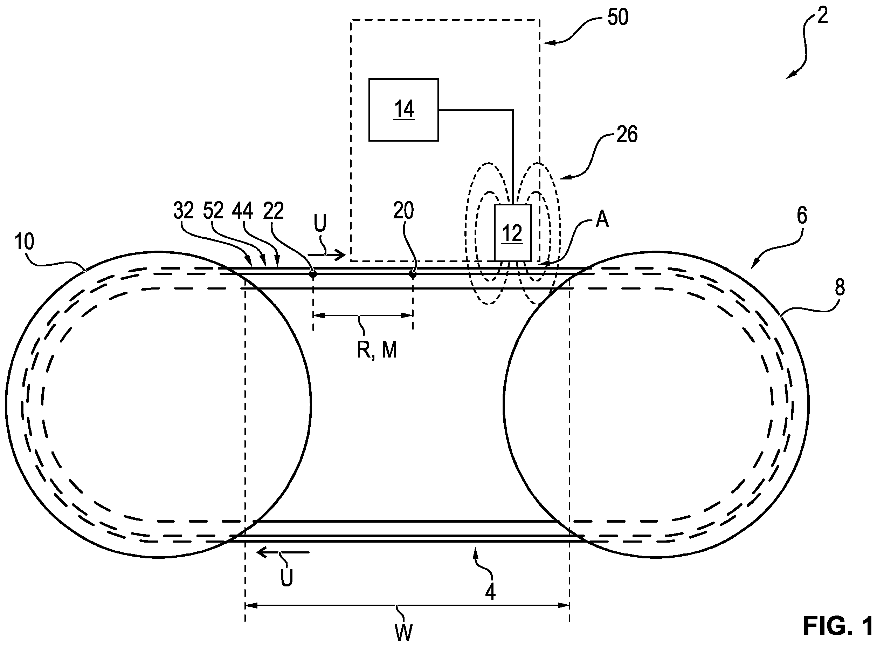

In der Figur 1 ist eine vorteilhafte Ausgestaltung des Systems 2 schematisch dargestellt. Das Systems 2 weist einen Riemen 4 und eine Antriebsvorrichtung 6 mit beispielsweise zwei Riemenscheiben 8, 10 auf. Eine der beiden Riemenscheiben 8, 10 kann als antreibende Riemenscheibe mit einem Motor der Antriebsvorrichtung gekoppelt sein. Der Riemen 4 ist in Umfangsrichtung U ringförmig umlaufend ausgebildet und umschlingt jede der beiden Riemenscheiben 8, 10 teilweise. Der Riemen 4 kann deshalb von der Antriebsvorrichtung 6 mit den beiden Riemenscheiben 8, 10 angetrieben werden, und zwar sodass der Riemen 4 in Umfangsrichtung U umläuft.

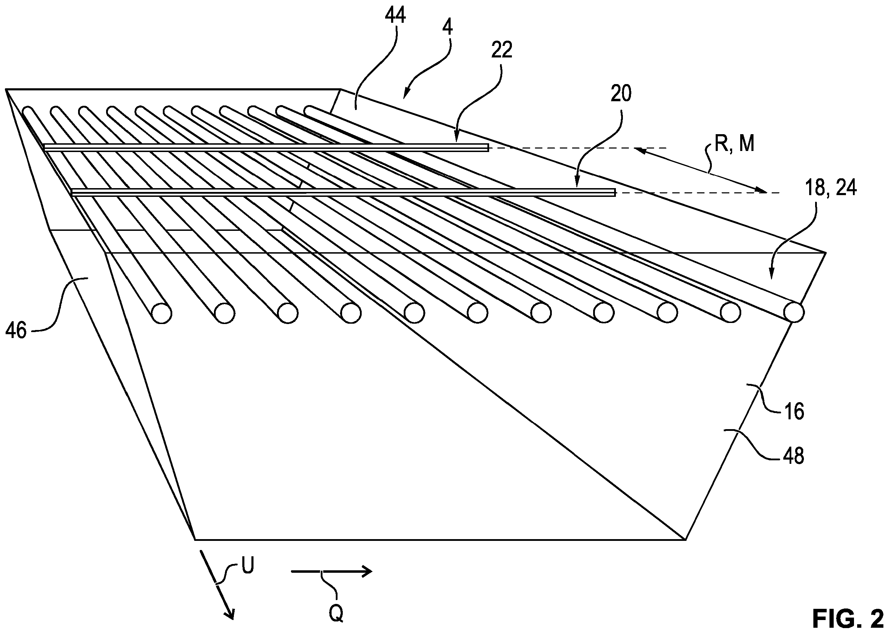

Der Riemen 4 weist ein Basismaterial 16 und mindestens einen Festigkeitsträger 18 auf. Rein beispielhaft wird im Folgenden davon ausgegangen, dass der Riemen 4 einen Festigkeitsträger 18 aufweist. Das Basismaterial 16 kann beispielsweise teilweise oder vollständig von Gummimaterial oder teilweise oder vollständig von Polyurethanmaterial gebildet sein. Andere Materialien für das Basismaterial 16 können jedoch auch vorgesehen sein. Vorzugsweise ist das Basismaterial 16 elektrisch isolierend ausgebildet. Der Festigkeitsträger 18 ist als ein durchgängiger in Umfangsrichtung U schraubenförmig gewendelter Cord 24 in das Basismaterial 16 eingebettet. Der Festigkeitsträger 18 dient zur Übertragung von Kräften in Umfangsrichtung U des Riemens 4. Der Festigkeitsträger 18 kann beispielsweise von einem metallischen Draht oder von einem Kunststofffilamentstrang, wie beispielsweise einem Kunststofffaserstrang aus Polyamid gebildet sein. Rein beispielhaft wird in diesem Zusammenhang auf den Abschnitt des Riemens 4 aus der Figur 2 verwiesen. Aus der Figur 2 geht beispielhaft hervor, dass die einzelnen Windungen des den Festigkeitsträger 18 bildenden Cords 24 in Querrichtung Q des Riemens 4 verteilt zueinander angeordnet sein können. Jeder der Windungen erstreckt sich dabei in Umfangsrichtung U.

Der Riemen 4 weist außerdem ein erstes ferromagnetisches Markierungsteil 20 sowie ein zweites ferromagnetisches Markierungsteil 22 auf. Das erste ferromagnetische Markierungsteil 20 wird auch kurz als erstes Markierungsteil 20 bezeichnet. Das zweite ferromagnetische Markierungsteil 22 wird auch kurz als zweites Markierungsteil 22 bezeichnet. Das erste Markierungsteil 20 und das zweite Markierungsteil 22 sind jeweils in das Basismaterial 16 des Riemens 4 eingebettet. Dabei können die beiden Markierungsteile 20, 22 oberhalb des Festigkeitsträgers 18 in das Basismaterial 16 eingebettet sein. Grundsätzlich ist es aber auch möglich, dass die beiden Markierungsteile 20, 22 unterhalb des Festigkeitsträgers 18 in das Basismaterial 16 eingebettet ist. Darüber hinaus besteht die Möglichkeit, dass die beiden Markierungsteile 20, 22 auf einer Außenseite 44 des Riemens 4 angeordnet sind. Diese Ausgestaltung ist in der Figur 2 nicht dargestellt. Bei der Außenseite 44 kann es sich beispielsweise um den sogenannten Rücken des Riemens 4 handeln.

Jeder der beiden ferromagnetischen Markierungsteile 20, 22 kann vollständig oder zumindest teilweise von ferromagnetischen Material und/oder Stoff gebildet sein. Beispielsweise sind Eisen, Nickel oder Kobalt Stoffe mit ferromagnetischen Eigenschaften. In der Praxis werden jedoch häufig Legierungen mit ferromagnetischen Eigenschaften verwendet. Entsprechende Legierungen können beispielsweise ALNiCo-, SmCo- oder NiFeCo-Legierungen sein. Bei jedem der beiden Markierungsteile 20, 22 kann es sich deshalb beispielsweise um ein ferromagnetisches Metallmarkierungsteil oder um ein ferromagnetisches Legierungsmetallmarkierungsteil handeln.

In einem unbelasteten Zustand des Riemens 4, wenn also keine Zugkraft in Umfangsrichtung auf den Riemen 4 wirkt, ist das zweite Markierungsteil 22 in einem vorbestimmten Referenzabstand R in Umfangsrichtung U hinter dem ersten Markierungsteil 20 angeordnet. Hierbei handelt es sich vorzugsweise um den mittleren Abstand zwischen den beiden Markierungsteilen 20, 22 in dem unbelasteten Zustand des Riemens 4.

Wie aus der Figur 2 beispielhaft hervorgeht, ist es bevorzugt vorgesehen, dass jede der beiden Markierungsteile 20, 22 als ein stabförmiges Markierungsteil 20, 22 ausgebildet ist. Jedes der beiden Markierungsteile 20, 22 kann sich also in Querrichtung Q von einer ersten Seitenwand 46 des Riemens 4 zu einer gegenüberliegenden Seitenwand 48 des Riemens 4 erstrecken. Bevorzugt ist es jedoch vorgesehen, dass jeder der beiden Markierungsteile 20, 22 kürzer als der Abstand in Querrichtung zwischen den beiden Seitenwänden 46, 48 ist. Dadurch kann gewährleistet werden, dass jeder der beiden Markierungsteile 20, 22 vollständig in das Basismaterial 16 des Riemens 4 eingebettet ist.

Außerdem ist es bevorzugt vorgesehen, dass das zweite Markierungsteil 22 parallel zu dem ersten Markierungsteil 20 angeordnet ist. Dadurch kann ein konstanter Referenzabstand R zwischen den beiden Markierungsteilen 20, 22 gewährleistet werden. Der Referenzabstand R zwischen den beiden Markierungsteilen 20, 22 liegt jedoch vorzugsweise nur im unbelasteten Zustand des Riemens vor. Im Betrieb des Riemens 4 wirken auf den Riemen 4 Zugkräfte in Umfangsrichtung U, was eine Dehnung des Riemens 4 in Umfangsrichtung U hervorruft. Dadurch vergrößert sich der Abstand zwischen dem ersten Markierungsteil 20 und dem zweiten Markierungsteil 22 auf einen Messabstand M, der größer als der Referenzabstand R ist. Der Quotient aus dem Messabstand M und dem Referenzabstand R ist dabei repräsentativ für die Längsdehnung des Riemens. Denn die Längsdehnung des Riemens ist eine relative Dehnung des Riemens 4. Vorzugsweise ist die Längsdehnung des Riemens durch das Verhältnis von dem Messabstand M zu dem Referenzabstand R bestimmt. Insbesondere wenn das erste und zweite Markierungsteil 20 in dem Basismaterial 16 des Riemens 4 eingebettet sind, ist eine Erfassung der beiden Markierungsteile 20, 22 nur indirekt möglich.

Das System weist deshalb einen Transmitter 12 und eine Auswerteeinheit 14 auf. Der Transmitter 12 und die Auswerteeinheit 14 können kombiniert ausgebildet sein und/oder einer gemeinsamen Vorrichtung 50 zugeordnet sein. Die Vorrichtung 50 kann somit den Transmitter 12 und die Auswerteeinheit 14 aufweisen und/oder ausbilden.

Der Transmitter 12 ist in einem vorbestimmten Abstand A von dem Riemen 4 beabstandet angeordnet. So kann der Transmitter 12 beispielweise in einem Abstand A zwischen 1 mm und 50 cm zu einem Zugtrum 52 des Riemens 4 angeordnet sein. Dabei kann der Transmitter 12 den Rücken bzw. der Außenseite 44 des Riemens 4 zugewandt sein. Durch den zuvor genannten, vorbestimmten Abstand A wird besonders einfach gewährleistet, dass der Transmitter 12 kontaktfrei an dem Trum 32, insbesondere dem Zugtrum 52, des Riemens 4 angeordnet ist.

Der Transmitter 12 ist zum Erzeugen eines ersten, elektromagnetischen Wechselfelds, das als das Referenzwechselfeld 26 bezeichnet wird, ausgebildet. Das Referenzwechselfeld 26 ist in Figur 1 schematisch durch Magnetfeldlinien angedeutet. Das Referenzwechselfeld 26 durchdringt den Riemen 4. Der Riemen 4 ist von der Antriebsvorrichtung 6 angetrieben. Dadurch wird gewährleistet, dass das erste Markierungsteil 20 und das zweite Markierungsteil 22 nacheinander in Umfangsrichtung U durch das Referenzwechselfeld 26 bewegt werden.

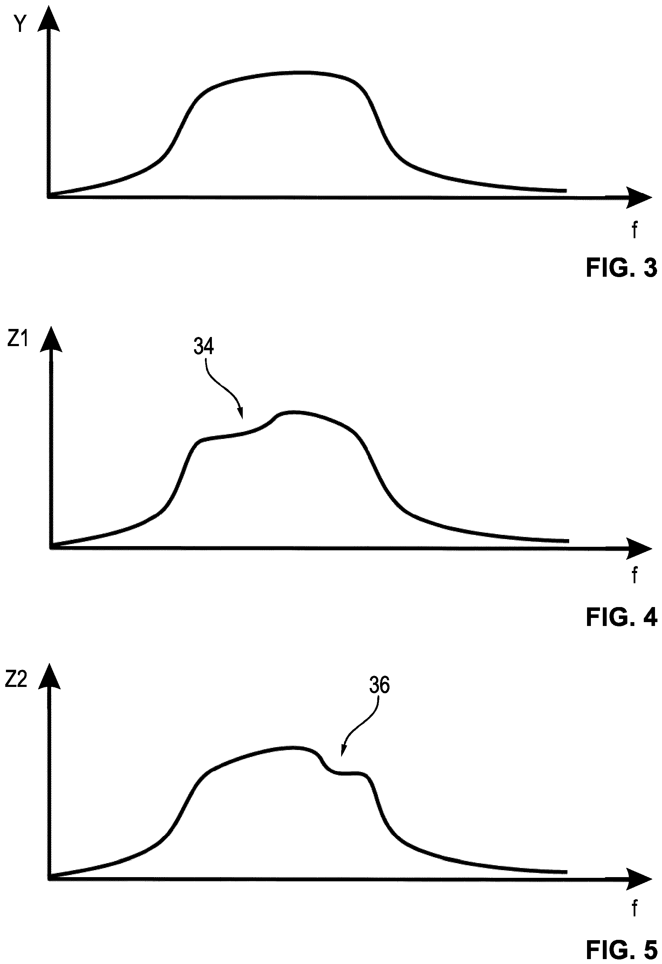

In der Figur 3 ist die Magnetfeldstärke Y in Abhängigkeit der Frequenz f des Referenzmagnetfelds 26 beispielhaft und schematisch dargestellt. Der entsprechend dargestellte Frequenzgang soll nicht einschränkend verstanden werden.

Das erste ferromagnetische Markierungsteil 20 ist zur Veränderung des Referenzwechselfelds 26 in das erste Reaktionswechselfeld ausgebildet, wenn das Reaktionswechselfeld auf das erste ferromagnetische Markierungsteil 20, oder umgekehrt, einwirkt. Durch die Wechselwirkung zwischen dem Referenzwechselfeld 26 und dem ersten Markierungsteil 20 entsteht also aus dem Referenzwechselfeld das erste Reaktionswechselfeld. Dies weist eine Veränderung gegenüber dem ursprünglichen Referenzwechselfeld 26 auf.

Wie zuvor erläutert, werden das erste Markierungsteil 20 und das zweite Markierungsteil 22 nacheinander an dem Transmitter 12 vorbeigeführt, so dass zunächst das erste Markierungsteil 20 durch die Wechselwirkung mit dem Referenzwechselfeld 26 das erste Reaktionswechselfeld hervorruft. Der Transmitter 12 ist zur Erfassung des ersten Reaktionswechselfelds und einer zugehörigen ersten Erfassungszeit T1 ausgebildet, wenn das erste Markierungsteil 20 an dem Transmitter 12 vorbeigeführt wird.

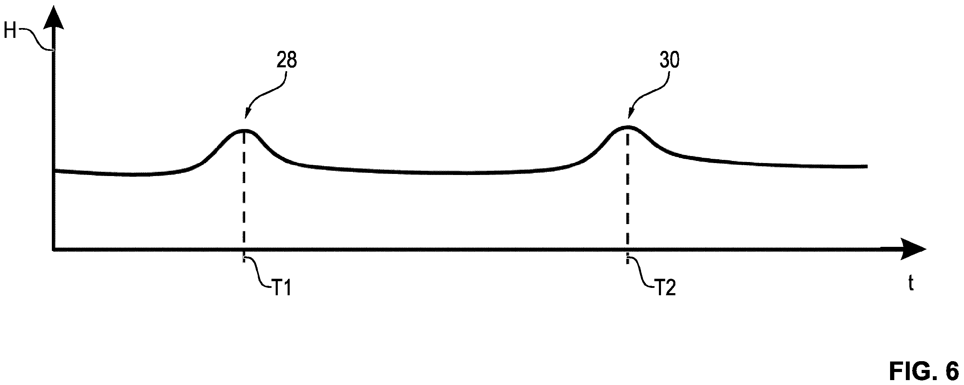

In der Figur 6 ist beispielhaft die mittlere Feldstärke H des Wechselfelds im Bereich zwischen dem Riemen 4 und dem Transmitter 12 schematisch dargestellt. Sofern ein Riemenbereich ohne eines der beiden Markierungsteile durch das Referenzwechselfeld 26 bewegt wird, liegt zumindest im Wesentlichen keine Änderung der mittleren Feldstärke H vor. Wird hingegen das erste Markierungsteil 20 mit dem Riemen 4 durch das Referenzwechselfeld 26 geführt, verändert sich die mittlere Feldstärke H im Bereich 28, was als erste Veränderung der Feldstärke H bezeichnet wird. Nachdem das erste Markierungsteil 20 an dem Transmitter 12 vorbeigeführt ist, nimmt die mittlere Feldstärke H wieder den vorherigen Wert zumindest im Wesentlichen an.

Das zweite ferromagnetische Markierungsteil 22 ist zur Veränderung des Referenzwechselfelds 26 in das zweite Reaktionswechselfeld ausgebildet, wenn das Referenzwechselfeld 26 auf das zweite Markierungsteil 22, oder umgekehrt, einwirkt. Durch die Wechselwirkung zwischen dem Referenzwechselfeld 26 und dem zweiten Markierungsteil 22 entsteht also aus dem Referenzwechselfeld das erste Reaktionswechselfeld 26. Dies weist eine Veränderung gegenüber dem Referenzwechselfeld 26 auf. Eine entsprechende Veränderung im Bereich 30 in der Figur 6 zeigt deshalb ebenfalls die entsprechende Änderung der mittleren Feldstärke H an. Diese ist durch die Bewegung des zweiten Markierungsteils 22 durch das Referenzwechselfelds 26 verursacht.

In der Figur 4 ist das Spektrum des Wechselfelds dargestellt, das zum Zeitpunkt T1 in dem Bereich zwischen dem Riemen 4 und dem Transmitter 12 anliegt, wobei die Feldstärke Z1 in Abhängigkeit der Frequenz aufgetragen ist. Auch hier ist im Vergleich zu dem Frequenzgang aus Figur 3 eine Veränderung 34 zu erkennen, die zu der Veränderung 28 in Figur 6 korrespondiert.

In der Figur 5 ist die Feldstärke Z2 für den Bereich zwischen dem Riemen 4 und dem Transmitter 12 gegenüber der Frequenz f ausgetragen. Auch dieses entsprechende Spektrum zeigt eine Veränderung 36 gegenüber dem Spektrum aus der Figur 3 auf, wobei die Veränderung 36 zu der Veränderung 30 aus der Figur 6 korrespondiert.

Wenn das zweite Markierungsteil 22 mit dem Riemen 4 durch das Referenzwechselfeld 26 bewegt wird, wird dies ebenfalls von dem Transmitter 12 erfasst. Denn der Transmitter 12 ist zur Erfassung des zweiten Reaktionswechselfelds und der zugehörigen zweiten Erfassungszeit T2 ausgebildet, wenn das zweite Markierungsteil 22 an dem Transmitter 12 vorbeigeführt wird.

Der Riemen 4 wird mit einer Riemengeschwindigkeit in Umfangsrichtung U von der Antriebsvorrichtung 6 angetrieben. Bei einer beispielhaft angenommen, konstanten Riemengeschwindigkeit des Riemens 4 vergrößert sich der zeitliche Abstand zwischen der ersten Erfassungszeit T1 und der zweiten Erfassungszeit T2, wenn sich die auf den Riemen 4 in Umfangsrichtung U wirkenden Zugkräfte vergrößern. Denn durch die Vergrößerung der Zugkräfte wird der Messabstand M zwischen dem zweiten Markierungsteil 22 und dem ersten Markierungsteil 20 vergrößert. Entsprechend dem vergrößerten Messabstand 11 vergrößert sich deshalb auch der zeitliche Abstand zwischen der zweiten Erfassungszeit T2 und der ersten Erfassungszeit T1.

Das System 2 ist außerdem dazu konfiguriert, die Riemengeschwindigkeit des Riemens 4 in Umfangsrichtung U basierend auf dem ersten Reaktionswechselfeld und/oder dem zweiten Reaktionswechselfeld zu ermitteln. Dazu kann der Transmitter 12 als ein magnetoresistiver Sensor ausgebildet sein oder diesen aufweisen. Somit ist der Transmitter 12 des Systems 2 dazu ausgebildet, die Riemengeschwindigkeit des Riemens 4 in Umfangsrichtung U basierend auf dem ersten Reaktionswechselfeld und/oder dem zweiten Reaktionswechselfeld zu ermitteln.

Der Transmitter 12 ist mit der Auswerteeinheit 14, insbesondere über eine Signalleitung, gekoppelt. Dadurch stehen der Auswerteeinheit die von dem Transmitter 12 erfassten Messgrößen zur Verfügung. Die Auswerteeinheit 14 ist dazu konfiguriert, eine Längsdehnung des Riemens 4 basierend auf dem Referenzabstand R, der Riemengeschwindigkeit, der ersten Erfassungszeit T1 und der zweiten Erfassungszeit T2 zu ermitteln. Dazu kann die folgende Formel in der Auswerteeinheit 14 hinterlegt sein. Die Auswerteeinheit 14 kann zur Auswertung der Formel gebildet sein.

$$L\ddot{a}ngsdehnung = \frac{Riemengeschwindigkeit * (T2 - T1)}{R} - 1$$

Wie es beispielhaft aus der Figur 1 zu entnehmen ist, ist es bevorzugt vorgesehen, dass der Transmitter 12 dem Zugtrum 52 zugewandt ist. Außerdem ist es bevorzugt vorgesehen, dass der Referenzabstand R zwischen dem zweiten Markierungsteil 22 und dem ersten Markierungsteil 20 kleiner ist als die Trumlänge B des Zugtrums 52. So ist es bevorzugt vorgesehen, dass der Referenzabstand R maximal 70 % oder maximal 50 % der Trumlänge W des Zugtrums 52 ist.

Aus der Figur 2 kann darüber hinaus exemplarisch entnommen werden, dass es bevorzugt ist, dass das erste Markierungsteil 20 einstückig ausgebildet ist und dass das zweite Markierungsteil 22 einstückig ausgebildet.

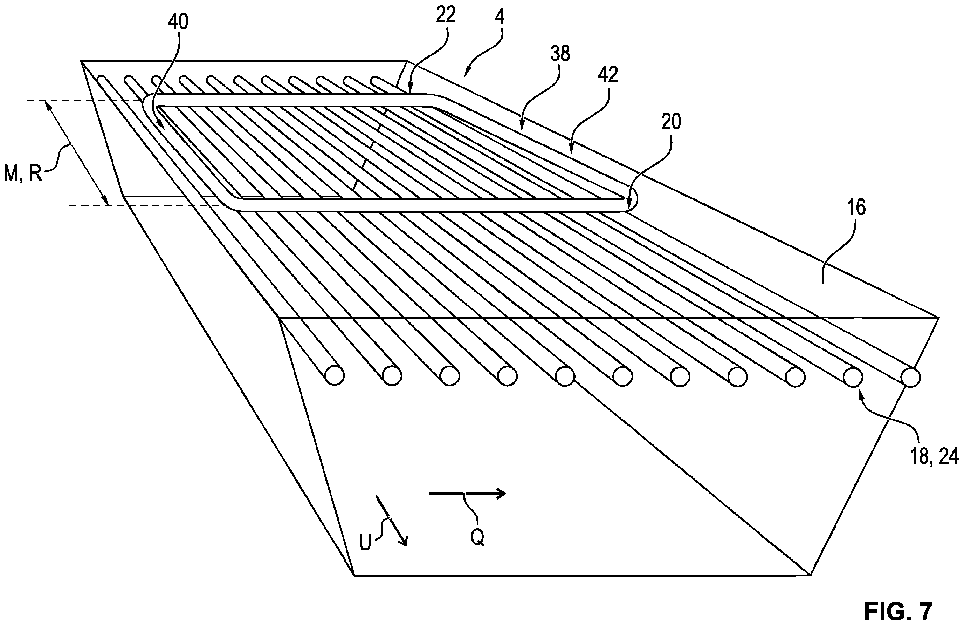

Eine erfindungsgemäße Ausgestaltung der beiden Markierungsteile 20, 22 ist schematisch aus dem Abschnitt des Riemens 4 zu entnehmen, wie dieser beispielhaft in der Figur 7 schematisch dargestellt ist. Die stirnseitigen Enden der beiden Markierungsteile 20, 22 sind über Verbindungsstege 38, 40 derart mechanisch verbunden, dass die beiden Markierungsteile 20, 22 und die beiden Verbindungsstege 38, 40 nach Art eines Rahmens 42 angeordnet und/oder umlaufend angeordnet sind. Die beiden Verbindungsstege 38, 40 können elektrisch isolierend ausgebildet sein. Es ist jedoch auch möglich, dass die beiden Verbindungsstege 38, 40 stoffschlüssig und ununterbrochen mit den beiden Markierungsteilen 20, 22 ausgebildet sind. Mit anderen Worten ist es möglich, dass ein ferromagnetischer Rahmen 42 jedes der beiden Markierungsteile 20, 22 und jeden der beiden Verbindungsstege 38, 40 bildet. Der Rahmen 42 bzw. die Verbindungsstege 38, 40 bieten den Vorteil, dass der vorbestimmte Referenzabstand R zwischen den beiden Markierungsteilen 20, 22 in dem unbelasteten Zustand des Riemens 4 besonders einfach sichergestellt ist.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

**Bezugszeichenliste (Teil der Beschreibung)**

| | |
|---|---|
| A | Abstand |
| H | mittlere Feldstärke |
| M | Messabstand |
| Q | Querrichtung |
| R | Referenzabstand |
| T1 | erste Erfassungszeit |
| T2 | zweite Erfassungszeit |
| U | Umfangsrichtung |
| W | Trumlänge |

| | |
|---|---|
| 2 | System |
| 4 | Riemen |
| 6 | Antriebsvorrichtung |
| 8 | Riemenscheibe |
| 10 | Riemenscheibe |
| 12 | Transmitter |
| 14 | Auswerteeinheit |
| 16 | Basismaterial |
| 18 | Festigkeitsträger |
| 20 | erste Markierungsteil |
| 22 | zweites Markierungsteil |
| 24 | Cord |
| 26 | Referenzwechselfeld |
| 28 | erste Veränderung der Feldstärke |
| 30 | zweite Veränderung der Feldstärke |
| 32 | Trum |
| 34 | erste Veränderung im Frequenzspektrum |
| 36 | zweite Veränderung im Frequenzspektrum |
| 38 | Verbindungssteg |
| 40 | Verbindungssteg |
| 42 | Rahmen |
| 44 | Außenseite |
| 46 | Seitenwand |
| 48 | Seitenwand |
| 50 | Vorrichtung |
| 52 | Zugtrum |

**Patentansprüche**

1. System (2) zur Ermittlung einer Längsdehnung eines Riemens (4), aufweisend:

   einen Riemen (4),
   eine Antriebsvorrichtung (6) mit mehreren Riemenscheiben (8, 10),
   einen Transmitter (12), und
   eine Auswerteeinheit (14), die mit dem Transmitter (12) kombiniert ausgebildet sein kann,
   wobei der Riemen (4) ein Basismaterial (16), einen Festigkeitsträger (18), ein erstes ferromagnetisches Markierungsteil (20) und ein zweites ferromagnetisches Markierungsteil (22) aufweist,
   wobei das Basismaterial (16) vorzugsweise aus Gummimaterial oder Polyurethanmaterial ist,
   wobei der Riemen (4) in einer Umfangsrichtung (U) ringförmig umlaufend ausgebildet ist,
   wobei der Riemen (4) die Riemenscheiben (8, 10) zumindest teilweise umschlingt und von der Antriebsvorrichtung (6) in Umfangsrichtung (U) antreibbar ist,
   wobei der Festigkeitsträger (18) als ein durchgängiger, in Umfangsrichtung (U) schraubenförmig gewendelter Cord (24) in das Basismaterial (16) eingebettet ist,
   wobei das erste Markierungsteil (20) und das zweite Markierungsteil (22) jeweils in das Basismaterial (16) eingebettet und/oder an dem Basismaterial (16) befestigt sind,
   wobei der Transmitter (12) zum Erzeugen eines ersten, elektromagnetischen Wechselfelds ausgebildet ist, das als Referenzwechselfeld (26) bezeichnet ist,
   wobei das erste ferromagnetische Markierungsteil (20) zur Veränderung des Referenzwechselfelds (26) in ein zweites, elektromagnetisches Wechselfeld ausgebildet ist, das als erstes Reaktionswechselfeld bezeichnet ist, wenn das Referenzwechselfeld (26) auf das erste ferromagnetische Markierungsteil (20) einwirkt,
   wobei das zweite ferromagnetische Markierungsteil (22) zur Veränderung des Referenzwechselfelds (26) in ein drittes, elektromagnetisches Wechselfeld ausgebildet ist, das als zweites Reaktionswechselfeld bezeichnet ist, wenn das Referenzwechselfeld (26) auf das zweite ferromagnetische Markierungsteil (22) einwirkt,
   wobei das zweite Markierungsteil (22) in einem vorbestimmten Referenzabstand (R) in Umfangsrichtung (U) hinter dem ersten Markierungsteil (20) angeordnet ist, zumindest in einem unbelasteten Zustand des Riemens (4),
   wobei der Transmitter (12) kontaktfrei zu dem Riemen (4) derart angeordnet ist, so dass das erste und zweite Markierungsteil (22) mittels des Riemens (4) nacheinander an dem Transmitter (12) vorbeiführbar und durch das Referenzwechselfeld (26) hindurchführbar sind, was in einem Einwirken des Referenzwechselfelds (26) nacheinander auf das erste und zweite Markierungsteil (20, 22) resultiert,
   wobei der Transmitter (12) zur Erfassung des ersten Reaktionswechselfelds und einer zugehörigen ersten Erfassungszeit (T1) ausgebildet ist, wenn das erste Markierungsteil (20) an dem Transmitter (12) vorbeigeführt wird,
   wobei der Transmitter (12) zur Erfassung des zweiten Reaktionswechselfelds und der zugehörigen zweiten Erfassungszeit (T2) ausgebildet ist, wenn das zweite Markierungsteil (22) an dem Transmitter (12) vorbeigeführt wird,
   das System (2) konfiguriert ist, eine Riemengeschwindigkeit des Riemens (2) in Umfangsrichtung (U) basierend auf dem ersten und/oder zweiten Reaktionswechselfeld zu ermitteln, und
   wobei die Auswerteeinheit (14) dazu konfiguriert ist, eine Längsdehnung des Riemens (2) basierend auf dem Referenzabstand (R), der Riemengeschwindigkeit, der ersten Erfassungszeit (T1) und der zweiten Erfassungszeit (T2) zu ermitteln.
   **dadurch gekennzeichnet, dass**
   das erste und zweite Markierungsteil (20, 22) zumindest indirekt miteinander mittels Verbindungsstege (38, 40) verbunden ausgebildet sind, so dass der vorbestimmte Referenzabstand (R) in dem unbelasteten Zustand des Riemens zwischen den beiden Markierungsteilen in Umfangsrichtung sicher gewährleistet werden kann.

2. System (2) nach dem vorhergehenden Anspruch, **dadurch gekennzeichnet, dass** die Auswerteeinheit (14) konfiguriert ist, eine Restlebensdauer des Riemens (4) basierend auf einer Historie ermittelter Längsdehnungen des Riemens (4) zu ermitteln.

3. System (2) nach einem der vorhergehenden Ansprüche, **dadurch gekennzeichnet, dass** die erste Erfassungszeit (T1) einen Zeitpunkt einer maximalen Veränderung des Referenzwechselfelds (26) durch das erste Markierungsteil (20) repräsentiert, und dass die zweite Erfassungszeit (T2) einen Zeitpunkt einer maximalen Veränderung des Referenzwechselfelds (26) durch das zweite Markierungsteil (22) repräsentiert.

**4.** System (2) nach einem der vorhergehenden Ansprüche, **dadurch gekennzeichnet, dass** der Transmitter (12), insbesondere als ein Teil einer Transmitter-Auswerteeinheit, kontaktfrei an einem Trum (32) des Riemens (4) angeordnet ist.

**5.** System (2) nach dem vorhergehenden Anspruch, **dadurch gekennzeichnet, dass** der Transmitter (12), insbesondere als ein Teil der Transmitter-Auswerteeinheit, in einem Abstand (A) zwischen 1 mm und 50 cm zu dem Trum (32) des Riemens (4) angeordnet ist.

**6.** System (2) nach einem der vorhergehenden Ansprüche, **dadurch gekennzeichnet, dass** der Referenzabstand (R) kleiner als die kleinste Trumlänge (W) des Riemens (4) ist.

**7.** System (2) nach einem der vorhergehenden Ansprüche, **dadurch gekennzeichnet, dass** der Referenzabstand (R) maximal 90%, 80%, 70%, 60% oder 50% der Trumlänge (W) beträgt.

**8.** System (2) nach einem der vorhergehenden Ansprüche, **dadurch gekennzeichnet, dass** jedes Markierungsteil (20, 22) passiv ausgebildet ist.

**9.** System (2) nach einem der vorhergehenden Ansprüche, **dadurch gekennzeichnet, dass** jedes Markierungsteil (20, 22) als ein stabförmiges und/oder folienförmiges Markierungsteil (20, 22) ausgebildet ist, wobei sich jedes Markierungsteil (20, 22) mit seiner größten Ausdehnung quer zur Umfangsrichtung (U) erstreckt.

**10.** System (2) nach einem der vorhergehenden Ansprüche, **dadurch gekennzeichnet, dass** jedes Markierungsteil (20, 22) vorgefertigt ist.

**11.** System (2) nach einem der vorhergehenden Ansprüche, **dadurch gekennzeichnet, dass** jedes Markierungsteil (20, 22) einstückig ausgebildet ist.


**Claims**

**1.** System (2) for ascertaining a longitudinal extension of a belt (4), having:

  a belt (4),
  a drive device (6) with a plurality of belt pulleys (8, 10),
  a transmitter (12), and
  an evaluation unit (14) which can be designed in a manner combined with the transmitter (12),
  wherein the belt (4) has a base material (16), a reinforcement (18), a first ferromagnetic marking part (20) and a second ferromagnetic marking part (22),
  wherein the base material (16) is preferably composed of rubber material or polyurethane material,
  wherein the belt (4) is designed to revolve in a circumferential direction (U) in the form of a ring,
  wherein the belt (4) at least partially loops around the pulleys (8, 10) and can be driven in the circumferential direction (U) by the drive device (6),
  wherein the reinforcement (18) is embedded in the base material (16) as a continuous cord (24) helically wound in the circumferential direction (U),
  wherein the first marking part (20) and the second marking part (22) are each embedded in the base material (16) and/or are fastened to the base material (16),
  wherein the transmitter (12) is designed to generate a first, electromagnetic alternating field, which is referred to as the reference alternating field (26),
  wherein the first ferromagnetic marking part (20) is designed to change the reference alternating field (26) into a second, electromagnetic alternating field, which is referred to as the first reaction alternating field, when the reference alternating field (26) acts on the first ferromagnetic marking part (20),
  wherein the second ferromagnetic marking part (22) is designed to change the reference alternating field (26) into a third, electromagnetic alternating field, which is referred to as the second reaction alternating field, when the reference alternating field (26) acts on the second ferromagnetic marking part (22),
  wherein the second marking part (22) is arranged behind the first marking part (20) in the circumferential direction (U) with a predetermined reference spacing (R), at least in a non-loaded state of the belt (4),
  wherein the transmitter (12) is arranged without contact with the belt (4) in such a way that the first and the second marking part (22) can be guided past the transmitter (12) and can be guided through the reference alternating field (26) in succession by means of the belt (4), this resulting in the reference alternating field (26) acting on the first and the second marking part (20, 22) in succession,

wherein the transmitter (12) is designed to detect the first reaction alternating field and an associated first detection time (T1) when the first marking part (20) is guided past the transmitter (12),

wherein the transmitter (12) is designed to detect the second reaction alternating field and the associated second detection time (T2) when the second marking part (22) is guided past the transmitter (12),

the system (2) is configured to ascertain a belt speed of the belt (2) in the circumferential direction (U) based on the first and/or the second reaction alternating field, and

wherein the evaluation unit (14) is configured to ascertain a longitudinal extension of the belt (2) based on the reference spacing (R), the belt speed, the first detection time (T1) and the second detection time (T2), **characterized in that**

the first and the second marking part (20, 22) are designed in a manner at least indirectly connected to each other by means of connecting webs (38, 40), so that the predetermined reference spacing (R) can be reliably ensured between the two marking parts in the circumferential direction in the non-loaded state of the belt.

2. System (2) according to the preceding claim, **characterized in that** the evaluation unit (14) is configured to ascertain a remaining service life of the belt (4) based on a history of ascertained longitudinal extensions of the belt (4).

3. System (2) according to either of the preceding claims, **characterized in that** the first detection time (T1) represents a time of a maximum change in the reference alternating field (26) through the first marking part (20), and **in that** the second detection time (T2) represents a time of a maximum change in the reference alternating field (26) through the second marking part (22).

4. System (2) according to one of the preceding claims, **characterized in that** the transmitter (12), in particular as a part of a transmitter evaluation unit, is arranged without contact on a strand (32) of the belt (4).

5. System (2) according to the preceding claim, **characterized in that** the transmitter (12), in particular as a part of the transmitter evaluation unit, is arranged with a spacing (A) of between 1 mm and 50 cm from the strand (32) of the belt (4).

6. System (2) according to one of the preceding claims, **characterized in that** the reference spacing (R) is less than the minimum strand length (W) of the belt (4).

7. System (2) according to one of the preceding claims, **characterized in that** the reference spacing (R) is at most 90%, 80%, 70%, 60% or 50% of the strand length (W).

8. System (2) according to one of the preceding claims, **characterized in that** each marking part (20, 22) is of passive design.

9. System (2) according to one of the preceding claims, **characterized in that** each marking part (20, 22) is designed as a rod-like and/or film-like marking part (20, 22), wherein each marking part (20, 22) extends transversely to the circumferential direction (U) with its greatest extent.

10. System (2) according to one of the preceding claims, **characterized in that** each marking part (20, 22) is prefabricated.

11. System (2) according to one of the preceding claims, **characterized in that** each marking part (20, 22) is of one-piece design.

**Revendications**

1. Système (2) permettant de déterminer un allongement longitudinal d'une courroie (4), présentant :

une courroie (4),
un dispositif d'entraînement (6) pourvu de plusieurs poulies (8, 10),
un transmetteur (12), et
une unité d'évaluation (14) qui peut être réalisée en combinaison avec le transmetteur (12),

dans lequel la courroie (4) présente un matériau de base (16), un renfort (18), une première pièce de marquage ferromagnétique (20) et une deuxième pièce de marquage ferromagnétique (22),

dans lequel le matériau de base (16) est de préférence un matériau de caoutchouc ou un matériau de polyuréthane,

dans lequel la courroie (4) est réalisée de manière périphérique en anneau dans une direction circonférentielle (U),

dans lequel la courroie (4) enlace les poulies (8, 10) au moins en partie et peut être entraînée par le dispositif d'entraînement (6) dans la direction circonférentielle (U),

dans lequel le renfort (18) est incorporé dans le matériau de base (16) sous la forme d'une corde (24) spiralée en hélice dans la direction circonférentielle (U),

dans lequel la première pièce de marquage (20) et la deuxième pièce de marquage (22) sont incorporées respectivement dans le matériau de base (16) et/ou fixées au matériau de base (16),

dans lequel le transmetteur (12) est réalisé pour générer un premier champ alternatif électromagnétique qui est appelé champ alternatif de référence (26),

dans lequel la première pièce de marquage ferromagnétique (20) est réalisée pour transformer le champ alternatif de référence (26) en un deuxième champ alternatif électromagnétique qui est appelé premier champ alternatif de réaction lorsque le champ alternatif de référence (26) agit sur la première pièce de marquage ferromagnétique (20),

dans lequel la deuxième pièce de marquage ferromagnétique (22) est réalisée pour transformer le champ alternatif de référence (26) en un troisième champ alternatif électromagnétique qui est appelé deuxième champ alternatif de réaction lorsque le champ alternatif de référence (26) agit sur la deuxième pièce de marquage ferromagnétique (22),

dans lequel la deuxième pièce de marquage (22) est disposée à une distance de référence prédéterminée (R) dans la direction circonférentielle (U) derrière la première pièce de marquage (20), au moins dans un état non chargé de la courroie (4),

dans lequel le transmetteur (12) est disposé sans contact par rapport à la courroie (4) de telle sorte que la première et la deuxième pièce de marquage (22) peuvent être guidées l'une après l'autre devant le transmetteur (12) au moyen de la courroie (4) et peuvent être guidées à travers le champ alternatif de référence (26) ce qui conduit à un effet du champ alternatif de référence (26) successivement sur la première et la deuxième pièce de marquage (20, 22),

dans lequel le transmetteur (12) est réalisé pour détecter le premier champ alternatif de réaction et un premier temps de détection associé (T1) lorsque la première pièce de marquage (20) est guidée devant le transmetteur (12),

dans lequel le transmetteur (12) est réalisé pour détecter le deuxième champ alternatif de réaction et le deuxième temps de détection associé (T2) lorsque la deuxième pièce de marquage (22) est guidée devant le transmetteur (12),

le système (2) étant configuré pour déterminer une vitesse de courroie de la courroie (2) dans la direction circonférentielle (U) sur la base du premier et/ou du deuxième champ alternatif de réaction, et

dans lequel l'unité d'évaluation (14) est configurée pour déterminer un allongement longitudinal de la courroie (2) sur la base de la distance de référence (R), de la vitesse de courroie, du premier temps de détection (T1) et du deuxième temps de détection (T2),

**caractérisé en ce que** la première et la deuxième pièce de marquage (20, 22) sont réalisées en étant reliées au moins indirectement l'une à l'autre au moyen d'entretoises de liaison (38, 40) de sorte que la distance de référence prédéterminée (R) peut être assurée sûrement à l'état non chargé de la courroie entre les deux pièces de marquage dans la direction circonférentielle.

2. Système (2) selon la revendication précédente, **caractérisé en ce que** l'unité d'évaluation (14) est configurée pour déterminer une durée de vie restante de la courroie (4) sur la base d'un historique d'allongements longitudinaux déterminés pour la courroie (4).

3. Système (2) selon l'une quelconque des revendications précédentes, **caractérisé en ce que** le premier temps de détection (T1) est un instant d'une transformation maximale du champ alternatif de référence (26) par la première pièce de marquage (20), et **en ce que** le deuxième temps de détection (T2) est un instant d'une transformation maximale du champ alternatif de référence (26) par la deuxième pièce de marquage (22).

4. Système (2) selon l'une quelconque des revendications précédentes, **caractérisé en ce que** le transmetteur (12) est disposé sans contact sur un brin (32) de la courroie (4), en particulier sous la forme d'une partie d'une unité d'évaluation de transmetteur.

**5.** Système (2) selon la revendication précédente, **caractérisé en ce que** le transmetteur (12) est disposé à une distance (A) comprise entre 1 mm et 50 cm par rapport au brin (32) de la courroie (4), en particulier sous la forme d'une partie de l'unité d'évaluation de transmetteur.

**6.** Système (2) selon l'une quelconque des revendications précédentes, **caractérisé en ce que** la distance de référence (R) est inférieure à la plus petite longueur de brin (W) de la courroie (4).

**7.** Système (2) selon l'une quelconque des revendications précédentes, **caractérisé en ce que** la distance de référence (R) mesure au maximum 90 %, 80 %, 70 %, 60 % ou 50 % de la longueur de brin (W).

**8.** Système (2) selon l'une quelconque des revendications précédentes, **caractérisé en ce que** chaque pièce de marquage (20, 22) est réalisée de manière passive.

**9.** Système (2) selon l'une quelconque des revendications précédentes, **caractérisé en ce que** chaque pièce de marquage (20, 22) est réalisée sous la forme d'une pièce de marquage (20, 22) en forme de tige et/ou de feuille, chaque pièce de marquage (20, 22) s'étendant par sa plus grande dimension transversalement à la direction circonférentielle (U).

**10.** Système (2) selon l'une quelconque des revendications précédentes, **caractérisé en ce que** chaque pièce de marquage (20, 22) est préfabriquée.

**11.** Système (2) selon l'une quelconque des revendications précédentes, **caractérisé en ce que** chaque pièce de marquage (20, 22) est réalisée d'un seul tenant.

FIG. 1

FIG. 2

**FIG. 3**

**FIG. 4**

**FIG. 5**

FIG. 6

**FIG. 7**

EP 3 623 748 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5291131 A
- JP 2018047973 A
- CN 104692078 B
- DE 102013111191 A1
- DE 19902759 A1
- DE 102010002551 A1
- DE 102011051923 A1